(19) Europäisches Patentamt
European Patent Office
Office européen des brevets

(11) **EP 4 408 092 A2**

(12) **EUROPEAN PATENT APPLICATION**

(43) Date of publication:
**31.07.2024 Bulletin 2024/31**

(21) Application number: **24179923.8**

(22) Date of filing: **29.04.2020**

(51) International Patent Classification (IPC):
*H04W 68/02* (2009.01)

(52) Cooperative Patent Classification (CPC):
**H04W 52/0235; H04L 5/0048; H04L 5/0053;
H04W 68/025;** H04L 5/0091; Y02D 30/70

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(62) Document number(s) of the earlier application(s) in
accordance with Art. 76 EPC:
**20934140.3 / 4 090 085**

(71) Applicant: **GUANGDONG OPPO MOBILE
TELECOMMUNICATIONS
CORP., LTD.
Wusha, Chang'an
Dongguan
Guangdong 523860 (CN)**

(72) Inventors:
• **HU, Yi
DongGuan, 523860 (CN)**
• **LI, Haitao
DongGuan, 523860 (CN)**

(74) Representative: **Ipside
7-9 Allée Haussmann
33300 Bordeaux Cedex (FR)**

Remarks:
This application was filed on 04-06-2024 as a
divisional application to the application mentioned
under INID code 62.

(54) **COMMUNICATION METHOD, APPARATUS AND CHIP**

(57) The present application provides a communication method and apparatus as well as a chip. The method includes: monitoring a wake-up signal from a network device, wherein the wake-up signal is used to wake up the terminal device that monitors, on a next paging occasion, PO, a physical downlink control channel, PDCCH, scrambled by a paging radio network temporary identifier, P-RNTI; determining, according to the wake-up signal a monitoring situation of monitoring the PDCCH scrambled by the P-RNTI on the next PO; herein the wake-up signal comprises first indication information, the first indication information is used for an indication of waking up at least one group of terminal devices; the first indication information is bitmap information, each bit in the bitmap information corresponds to a group of terminal devices, and the bit is used for an indication of a wake-up state of the terminal device in the corresponding group of terminal devices.

EP 4 408 092 A2

**Description**

TECHNICAL FIELD

The present application relates to the field of information technologies and, in particular, to a communication method, apparatus and chip.

BACKGROUND

A main function of paging (Paging) is to enable a network device to page a terminal device through a paging message (paging message) in a radio resource control (Radio Resource Control, RRC) idle state or an RRC inactive state of the terminal device, or to send a short message (short message) to the terminal device to inform the terminal device of system message changes or public warning information such as earthquakes and tsunamis.

For the terminal device in the RRC idle state or the RRC inactive state, since there is no other data communication with the network device, in order to save power, the terminal device may adopt a paging discontinuous reception (paging discontinuous reception, paging DRX) mechanism to monitor a paging channel discontinuously. Under the Paging DRX mechanism, the terminal device only needs to monitor, on a paging occasion during each DRX period, a physical downlink control channel (physical downlink control channel, PDCCH) scrambled by a radio network temporary identifier (paging radio network temporary identifier, P-RNTI) so as to monitor the paging message.

However, when there are many terminal devices in a communication system, the network device cannot allocate a different paging occasion to each terminal device. There may be a case that multiple terminal devices correspond to one paging occasion. If the network device needs to page one of the terminal devices on this paging occasion, as a result, other terminal devices on the paging occasion may monitor the paging message, causing paging false alarms of other terminal devices on the paging occasion.

SUMMARY

Embodiments of the present application provide a communication method, apparatus and chip to solve a problem of a paging false alarm of a terminal device in the prior art.

Various aspects of the present application are defined in the claims.

The embodiments of the present application further provide the following technical solutions.

1. A communication method, comprising:

monitoring, by a terminal device, a wake-up signal from a network device, wherein the wake-up signal is used to wake up the terminal device that monitors, on a next paging occasion PO, a physical downlink control channel PDCCH scrambled by a paging radio network temporary identifier P-RNTI;

determining, according to the wake-up signal, by the terminal device, a monitoring situation of monitoring on the next PO the PDCCH scrambled by the P-RNTI.

2. The method according to solution 1, wherein the wake-up signal is used for an indication of at least one group of terminal devices of multiple groups of terminal devices monitoring on the next PO the PDCCH scrambled by the P-RNTI.

3. The method according to solution 2, wherein the wake-up signal comprises first indication information, the first indication information is used for an indication of waking up at least one group of terminal devices.

4. The method according to solution 3, wherein the first indication information is bitmap information, each bit in the bitmap information corresponds to a group of terminal devices, and the bit is used for an indication of waking up a wake-up state of the terminal device in the corresponding group of terminal devices.

5. The method according to solution 3, wherein the first indication information comprises one or more group identifiers, wherein each group identifier is used to indicate a device group of a group of terminal devices.

6. The method according to solution 5, wherein the at least one group identifier is used to indicate a device group of an awakened terminal device.

7. The method according to solution 5, wherein the at least one group identifier is used to indicate a device group of a non-awakened terminal device.

8. The method according to any one of solutions 3 to 7, wherein the determining the monitoring situation of monitoring on the next PO the PDCCH scrambled by the P-RNTI comprises:

determining, according to the first indication information, by the terminal device, whether the terminal device belongs to at least one group of awakened terminal devices;
if yes, monitoring on the next PO, by the terminal device, the PDCCH scrambled by the P-RNTI.

9. The method according to solution 1, wherein the wake-up signal is used for an indication of the terminal device in a target device group monitoring on the next PO the PDCCH scrambled by the P-RNTI.

10. The method according to solution 9, wherein the monitoring the wake-up signal from the network device comprises:

monitoring, by the terminal device, the wake-up signal corresponding to the device group of the terminal device according to the P-RNTI corresponding to the device group of the terminal device.

11. The method according to solution 9, wherein the monitoring the wake-up signal from the network device comprises:

monitoring, by the terminal device, the wake-up signal corresponding to the device group of the terminal device in a search space corresponding to the device group of the terminal device.

12. The method according to any one of solutions 9 to 11, wherein the determining the monitoring situation with regard to whether to monitor on the next PO the PDCCH scrambled by the P-RNTI comprises:

when the wake-up signal is monitored, determining, by the terminal device, to monitor on the next PO the PDCCH scrambled by the P-RNTI;
when the wake-up signal is not monitored, determining, by the terminal device, not to monitor on the next PO the PDCCH scrambled by the P-RNTI.

13. The method according to any one of solutions 9 to 11, wherein the wake-up signal comprises second indication information, the second indication information is used to indicate the device group corresponding to the wake-up signal.

14. The method according to solution 13, wherein the second indication information is bitmap information, each bit in the bitmap information corresponds to a device sub-group in the device group corresponding to the wake-up signal, the bit is used for an indication of waking up a wake-up state of the terminal device in the corresponding device sub-group.

15. The method according to any one of solutions 1 to 14, wherein the monitoring the wake-up signal from the network device comprises:

monitoring, by the terminal device, the wake-up signal from the network device on a PO of a target time period.

16. The method according to solution 15, wherein the target time period is a time period between a maximum time offset of the next PO and a minimum time offset of the next PO.

17. The method according to any one of solutions 1 to 16, further comprising:

receiving, by the terminal device, configuration information from the network device, wherein the configuration information is used for an indication of the terminal device monitoring the wake-up signal.

18. The method according to solution 17, wherein the configuration information comprises at least one of the following: a maximum time offset of the wake-up signal, a minimum time offset of the wake-up signal, a number of device groups, a number of device sub-groups, a number of paging frames PF in a discontinuous reception DRX period and a number of POs in a PF.

19. The method according to solution 18, further comprising:

determining, by the terminal device, the device group of the terminal device according to an identifier of the terminal device, the number of device groups, the number of PFs in the DRX period and the number of POs in the PF.

20. The method according to solution 19, wherein the determining the device group of the terminal device comprises:

determining, by the terminal device, the number of POs in the DRX period according to the number of PFs in the DRX period and the number of POs in the PF;
rounding down, by the terminal device, a ratio of the identifier of the terminal device to the number of POs in the DRX period to obtain a result of the rounding down;
performing, by the terminal device, a modular operation on the result of the rounding down according to the number of the device groups to obtain the device group of the terminal device.

21. The method according to solution 18, further comprising:

determining, by the terminal device, the device group and the device sub-group of the terminal device according to the identifier of the terminal device, the number of device groups, the number of device sub-groups, the number of PFs in the DRX period and the number of POs in the PF.

22. The method according to solution 21, wherein the determining the device group and the device sub-group of the terminal device comprises:

determining, by the terminal device, the number of POs in the DRX period according to the number of PFs in the DRX period and the number of POs in the PF;

rounding down, by the terminal device, a ratio of the identifier of the terminal device to the number of POs in the DRX period to obtain a result of the rounding down;

performing, by the terminal device, a modular operation on the result of the rounding down according to the number of the device groups and the number of the device sub-groups to obtain a result after the modular operation;

determining, by the terminal device, the device group and the device sub-group of the terminal device according to the number of the device groups or the number of the device sub-groups, and the result after the modular operation.

23. The method according to solution 22, wherein the determining the device group and the device sub-group of the terminal device according to the number of the device groups or the number of the device sub-groups, and the result after the modular operation comprises:

determining, by the terminal device, the device group of the terminal device according to a ratio of the result after the modular operation to the number of the device sub-groups;

re-performing, by the terminal device, a modular operation on the result after the modular operation according to the number of the device sub-groups to obtain the device sub-group of the terminal device.

24. The method according to solution 22, wherein the determining the device group and the device sub-group of the terminal device according to the number of the device groups or the number of the device sub-groups, and the result after the modular operation comprises:

re-performing, by the terminal device, a modular operation on the result after the modular operation according to the number of the device groups to obtain the device group of the terminal device;

determining, by the terminal device, the device sub-group of the terminal device according to a ratio of the result after the modular operation to the number of the device groups.

25. A communication method, comprising:

sending, by a network device, a wake-up signal to a terminal device, wherein the wake-up signal is used to wake up the terminal device that monitors, on a next paging occasion PO, a physical downlink control channel PDCCH scrambled by a paging radio network temporary identifier P-RNTI;

scheduling, by the network device, a physical downlink shared channel PDSCH on the next PO through the PDCCH scrambled by the P-RNTI, wherein the PDSCH is used to transmit a paging message.

26. The method according to solution 25, wherein the wake-up signal is used for an indication of at least one group of terminal devices of multiple groups of terminal devices monitoring on the next PO the PDCCH scrambled by the P-RNTI.

27. The method according to solution 26, wherein the wake-up signal comprises first indication information, the first indication information is used for an indication of waking up at least one group of terminal devices.

28. The method according to solution 27, wherein the first indication information is bitmap information, each bit in the bitmap information corresponds to a group of terminal devices, and the bit is used for an indication of waking up a wake-up state of the terminal device in the corresponding group of terminal devices.

29. The method according to solution 27, wherein the first indication information comprises one or more group identifiers, wherein each group identifier is used to indicate a device group of a group of terminal devices.

30. The method according to solution 29, wherein the at least one group identifier is used to indicate a device group of an awakened terminal device.

31. The method according to solution 29, wherein the at least one group identifier is used to indicate a device group of a non-awakened terminal device.

32. The method according to solution 25, wherein the wake-up signal is used for an indication of the terminal device in a target device group monitoring on the next PO the PDCCH scrambled by the P-RNTI.

33. The method according to solution 32, wherein the wake-up signal comprises second indication information, the second indication information is used to indicate the device group corresponding to the wake-up signal.

34. The method according to solution 33, wherein the second indication information is bitmap information, each bit in the bitmap information corresponds to a device sub-group in the device group corresponding to the wake-up signal, the bit is used for an indication of waking up a wake-up state of the terminal device in the corresponding device sub-group.

35. The method according to any one of solutions 25 to 34, further comprising:
sending, by the network device, configuration information to the terminal device, the configuration information is used to enable the terminal device to monitor the wake-up signal.

36. The method according to solution 35, wherein the configuration information comprises at least one of the following: a maximum time offset of the wake-up signal, a minimum time offset of the wake-up signal, a number of device groups, a number of device sub-groups, a number of paging frames PF in a discontinuous reception DRX period and a number of POs in a PF.

37. A communication apparatus, comprising:

> a monitoring module, configured to monitor a wake-up signal from a network device, wherein the wake-up signal is used to wake up a terminal device that monitors, on a next paging occasion PO, a physical downlink control channel PDCCH scrambled by a paging radio network temporary identifier P-RNTI;
> a processing module, configured to determine, according to the wake-up signal, a monitoring situation of monitoring on the next PO the PDCCH scrambled by the P-RNTI.

38. The apparatus according to solution 37, wherein the wake-up signal is used for an indication of at least one group of terminal devices of multiple groups of terminal devices monitoring on the next PO the PDCCH scrambled by the P-RNTI.

39. The apparatus according to solution 38, wherein the wake-up signal comprises first indication information, the first indication information is used for an indication of waking up at least one group of terminal devices.

40. The apparatus according to solution 39, wherein the first indication information is bitmap information, each bit in the bitmap information corresponds to a group of terminal devices, and the bit is used for an indication of waking up a wake-up state of the terminal device in the corresponding group of terminal devices.

41. The apparatus according to solution 39, wherein the first indication information comprises one or more group identifiers, wherein each group identifier is used to indicate a device group of a group of terminal devices.

42. The apparatus according to solution 41, wherein the at least one group identifier is used to indicate a device group of an awakened terminal device.

43. The apparatus according to solution 41, wherein the at least one group identifier is used to indicate a device group of a non-awakened terminal device.

44. The apparatus according to any one of solutions 39 to 43, wherein the processing module is specifically configured to: determine, according to the first indication information, whether the terminal device belongs to at least a group of awakened terminal devices; if yes, monitor on the next PO the PDCCH scrambled by the P-RNTI.

45. The apparatus according to solution 37, wherein the wake-up signal is used for an indication of the terminal device in a target device group monitoring on the next PO the PDCCH scrambled by the P-RNTI.

46. The apparatus according to solution 45, wherein the monitoring module is specifically configured to monitor the wake-up signal corresponding to the device group of the terminal device according to the P-RNTI corresponding to the device group of the terminal device.

47. The apparatus according to solution 45, wherein the monitoring module is specifically configured to monitor the wake-up signal corresponding to the device group of the terminal device in a search space corresponding to the device group of the terminal device.

48. The device according to any one of solutions 45 to 47, wherein the processing module is specifically configured to: when the wake-up signal is monitored, determine to monitor on the next PO the PDCCH scrambled by the P-RNTI; when the wake-up signal is not monitored, determine not to monitor on the next PO the PDCCH scrambled by the P-RNTI.

49. The apparatus according to any one of solutions 45 to 47, wherein the wake-up signal comprises second indication information, the second indication information is used to indicate the device group corresponding to the wake-up signal.

50. The apparatus according to solution 49, wherein the second indication information is bitmap information, each bit in the bitmap information corresponds to a device sub-group in the device group corresponding to the wake-up signal, the bit is used for an indication of waking up a wake-up state of the terminal device in the corresponding device sub-group.

51. The apparatus according to any one of solutions 37 to 50, wherein the monitoring module is specifically configured to monitor the wake-up signal from the network device on a PO of a target time period.

52. The apparatus of solution 51, wherein the target time period is a time period between a maximum time offset of the next PO and a minimum time offset of the next PO.

53. The apparatus according to any one of solutions 37 to 52, further comprising: a receiving module, configured to receive configuration information from the network device, wherein the configuration information is used for an indication of the terminal device monitoring the wake-up signal.

54. The apparatus according to solution 53, wherein the configuration information comprises at least one of the following: a maximum time offset of the wake-up signal, a minimum time offset of the wake-up signal, a number of device groups, a number of device sub-groups, a number of paging frames PF in a discontinuous reception DRX period and a number of POs in a PF.

55. The apparatus according to solution 54, wherein the processing module is further configured to determine the device group of the terminal device according to an identifier of the terminal device, the number of device groups, the number of PFs in the DRX period and the number of POs in the PF.

56. The apparatus according to solution 55, wherein the processing module is specifically configured to: determine the number of POs in the DRX period according to the number of PFs in the DRX period and the number of POs in the PF; round down a ratio of the identifier of the terminal device to the number of POs in the DRX period to obtain a result of the rounding down; perform a modular operation on the result of the rounding down according to the number of the device groups to obtain the device group of the terminal device.

57. The apparatus according to solution 54, wherein the processing module is further configured to determine the device group and the device sub-group of the terminal device according to the identifier of the terminal device, the number of device groups, the number of device sub-groups, the number of PFs in the DRX period and the number of POs in the PF.

58. The apparatus according to solution 57, wherein the processing module is specifically configured to: determine the number of POs in the DRX period according to the number of PFs in the DRX period and the number of POs in the PF; round down a ratio of the identifier of the terminal device to the number of POs in the DRX period to obtain a result of the rounding down; perform a modular operation on the result of the rounding down according to the number of the device groups and the number of the device sub-groups to obtain a result after the modular operation; determine the device group and the device sub-group of the terminal device according to the number of the device groups or the number of the device sub-groups, and the result after the modular operation.

59. The apparatus according to solution 58, wherein the processing module is specifically configured to: determine the device group of the terminal device according to the a ratio of the result after the modular operation to the number of the device sub-groups; re-perform a modular operation on the result after the modular operation according to the number of the device sub-groups to obtain the device sub-group of the terminal device.

60. The apparatus according to solution 58, wherein the processing module is specifically configured to: re-perform a modular operation on the result after the modular operation according to the number of the device groups to obtain the device group of the terminal device; determine the device sub-group of the terminal device according to a ratio of the result after the modular operation to the number of the device groups.

61. A communication apparatus, comprising:

   a sending module, configured to send a wake-up signal to a terminal device, wherein the wake-up signal is used to wake up the terminal device that monitors, on a next paging occasion PO, a physical downlink control channel PDCCH scrambled by a paging radio network temporary identifier P-RNTI;
   a paging module, configured to schedule a physical downlink shared channel PDSCH on the next PO through the PDCCH scrambled by the P-RNTI, wherein the PDSCH is used to transmit a paging message.

62. The apparatus according to solution 61, wherein the wake-up signal is used for an indication of at least one group of terminal devices of multiple groups of terminal devices monitoring on the next PO the PDCCH scrambled by the P-RNTI.

63. The apparatus according to solution 62, wherein the wake-up signal comprises first indication information, the first indication information is used for an indication of waking up at least one group of terminal devices.

64. The apparatus according to solution 63, wherein the first indication information is bitmap information, each bit in the bitmap information corresponds to a group of terminal devices, and the bit is used for an indication of waking up a wake-up state of the terminal device in the corresponding group of terminal devices.

65. The apparatus according to solution 63, wherein the first indication information comprises one or more group identifiers, wherein each group identifier is used to indicate a device group of a group of terminal devices.

66. The apparatus according to solution 65, wherein the at least one group identifier is used to indicate a device group of an awakened terminal device.

67. The apparatus according to solution 65, wherein the at least one group identifier is used to indicate a device group of a non-awakened terminal device.

68. The apparatus according to solution 61, wherein the wake-up signal is used for an indication of the terminal device in a target device group monitoring on the next PO the PDCCH scrambled by the P-RNTI.

69. The apparatus according to solution 68, wherein the wake-up signal comprises second indication information, the second indication information is used to indicate a device group corresponding to the wake-up signal.

70. The apparatus according to solution 69, wherein the second indication information is bitmap information, each bit in the bitmap information corresponds to a device sub-group in the device group corresponding to the wake-up signal, the bit is used for an indication of waking up a wake-up state of the terminal device in the corresponding device sub-group.

71. The apparatus according to any one of solutions 61 to 70, wherein the sending module is further configured to send configuration information to the terminal device, the configuration information is used to enable the terminal device to monitor the wake-up signal.

72. The apparatus according to solution 71, wherein the configuration information comprises at least one of the following: a maximum time offset of the wake-up signal, a minimum time offset of the wake-up signal, a number of device groups, a number of device sub-groups, a number of paging frames PF in a discontinuous reception DRX period and a number of POs in a PF.

According to the communication method and apparatus provided in the present application, a terminal device monitors a wake-up signal from a network device, where the wake-up signal is used to wake up the terminal device that monitors, on a next paging occasion PO, a physical downlink control channel PDCCH scrambled by a paging radio network temporary identifier P-RNTI; the terminal device determines, according to the wake-up signal, a monitoring situation of monitoring on the next PO the PDCCH scrambled by the P-RNTI. Compared with the prior art, since a wake-up mechanism is introduced, the terminal device monitors the wake-up signal from the network device and determines, according to the wake-up signal, the monitoring situation of monitoring on the next PO the PDCCH scrambled by the P-RNTI, preventing a terminal device that has no need for monitoring from monitoring on the next PO, thereby avoiding a paging false alarm of the terminal device.

BRIEF DESCRIPTION OF DRAWINGS

In order to explain the present invention or the technical solutions in the prior art more clearly, the drawings to be used in the embodiments or the description of the prior art will be introduced briefly in the following. Obviously, the drawings in the following description are some embodiments of the present invention. For those of ordinary skill in the art, other drawings can be obtained from these drawings without any creative effort.

FIG. 1 is a schematic diagram of a scenario of a communication method according to an embodiment of the present application;
FIG. 2 is a signaling interaction diagram of a communication method according to an embodiment of the present application;
FIG. 3 is a signaling interaction diagram of another communication method according to an embodiment of the present application;
FIG. 4 is a signaling interaction diagram of still another communication method according to an embodiment of the present application;
FIG. 5 is a signaling interaction diagram of yet another communication method according to an embodiment of the present application;
FIG. 6 is a schematic structural diagram of a communication apparatus according to an embodiment of the present application;
FIG. 7 is a schematic structural diagram of another communication apparatus according to an embodiment of the present application;
FIG. 8 is a schematic structural diagram of a terminal device according to an embodiment of the present application;
FIG. 9 is a schematic structural diagram of a network device according to an embodiment of the present application.

DESCRIPTION OF EMBODIMENTS

To describe the objectives, technical solutions and advantages of the present invention more clearly, the technical solutions in the embodiments of the present invention are clearly and comprehensively described in the following with reference to the accompanying drawings of the embodiments of the present invention. Obviously, the described embodiments are part of embodiments of the present invention, not all embodiments thereof. Based on the embodiments of the present invention, all other embodiments obtained by those ordinarily skilled in the art without any creative effort should fall into the protection scope of the present invention.

For a terminal device in an RRC idle state or an RRC inactive state, since there is no other data communication with a network device, in order to save power, the terminal device may adopt a paging discontinuous reception (paging discontinuous reception, paging DRX) mechanism to monitor a paging channel discontinuously. Under the Paging DRX mechanism, the terminal device only needs to monitor, on a paging occasion during each DRX period, a physical downlink control channel (physical downlink control channel, PDCCH) scrambled by a radio network temporary identifier (paging radio network temporary identifier, P-RNTI) so as to monitor the paging message.

However, when there are many terminal devices in a communication system, the network device cannot allocate a different paging occasion to each terminal device. There may be a case that multiple terminal devices correspond to one paging occasion. If the network device needs to page one of the terminal devices on this paging occasion, as a result, other terminal devices on the paging occasion may monitor the paging message, causing paging false alarms of other terminal devices on the paging occasion.

In order to solve the above problems, the present application provides a communication method and apparatus to avoid a false paging alarm of a terminal device. An inventive concept of the present application is as follows: with addition of a wake-up mechanism before paging, a terminal device monitors a wake-up signal from a network device, only the terminal device that needs wakening indicated by the wake-up signal monitors a PDCCH scrambled by a P-RNTI, and receives a paging message from the network device.

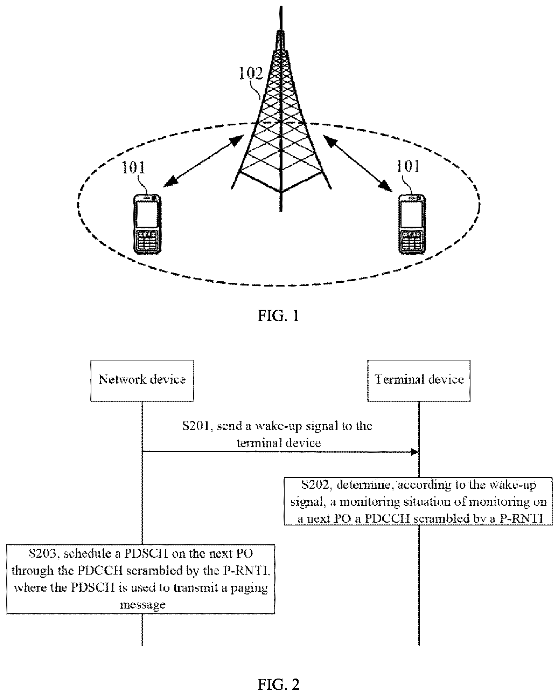

Usage scenarios of the present application will be illustrated in the following. FIG. 1 is a schematic diagram of a scenario of a communication method according to an embodiment of the present application. As shown in FIG. 1, a communication is performed between at least one terminal device 101 and a network device 102. Before sending a paging message to the at least one terminal device 101, the network device 102 may send a wake-up signal to the at least one terminal device 101 to indicate a terminal device that needs to perform monitoring.

The number of terminal devices 102 and network devices 101 included in the communication system is not limited in the embodiment of the present application.

The terminal device 102 may also be referred to as a terminal Terminal, a user equipment (user equipment, UE), a mobile station (mobile station, MS), a mobile terminal (mobile terminal, MT), or the like. The terminal device 101 may be a mobile phone (mobile phone), a tablet computer (pad), a computer with a wireless transceiver function, a virtual reality (virtual reality, VR) terminal device, an augmented reality (augmented reality, AR) terminal device, a wireless terminal in industrial control (industrial control), a wireless terminal in a self-driving (self driving), a wireless terminal in a remote medical surgery (remote medical surgery), a wireless terminal in a smart grid (smart grid), a wireless terminal in a smart home (smart home), or the like.

The network device 101 may be, for example, a base station, or various wireless access points, or may refer to a device that communicates with the user equipment via one or more sectors on an air interface in an access network. The base station may be used to convert received air frames into IP packets or vise versa, and act as a router between the wireless terminal and a rest of the access network, where the rest of the access network may include an internet protocol (IP) network. The base station may also coordinate attribute management for the air interface. For example, the base station may be a base transceiver station (base transceiver station, BTS) in a global mobile communication (global system of mobile communication, GSM) or a code division multiple access (code division multiple access, CDMA), or may be a NodeB (NodeB, NB) in a wideband code division multiple access (wideband code division multiple access, WCDMA), or may be an evolutional base station (evolutional nodeB, eNB or eNodeB) in a long term evolution (long term evolution, LTE), or a relay station or an access point, or a base station gNB in a future 5G network, etc., which is not limited here.

It should be noted that the communication method involved in the embodiments of the present application may be applied to a variety of communication systems. A communication system to which the embodiment of the present application is applicable is not limited, which may be an NR communication system or other communication systems.

It should be noted that the application scenario shown in FIG. 1 is only a scenario available for the present application, and the present application may also be applied to any other scenarios that need paging.

The terminal device and the network device are taken as examples in the following, and the technical solutions of the embodiment of the present application will be illustrated in detail with specific embodiments. The following specific embodiments may be combined with each other, and the same or similar concepts or processes may not be repeated in some embodiments.

FIG. 2 is a signaling interaction diagram of a communication method according to an embodiment of the present application. This embodiment relates to a process of how a terminal device and a network device interact. As shown in FIG. 2, the method includes:

S201, the network device sends a wake-up signal to the terminal device, where the wake-up signal is used to wake up the terminal device that monitors, on a next paging occasion PO, a physical downlink control channel PDCCH scrambled by a paging radio network temporary identifier P-RNTI.

In the present application, before the network device sends a paging message to the terminal device, the network device sends a wake-up signal to the terminal device, so as to wake up the terminal device that needs to perform monitoring.

How to send the wake-up signal (wake-up signal, WUS) is not limited in the embodiment of the present application. In an optional implementation, the network device may send the wake-up signal to the terminal device on a PDCCH scrambled by a specific RNT.

In some embodiments, since it is necessary to ensure that the wake-up signal arrives at the terminal device before a paging signal, it is necessary to ensure that the terminal device monitors the wake-up signal from the network device on a monitoring occasion of a target time period. Exemplarily, the target time period may be a time period between a maximum time offset (max WUS offset) of a next paging occasion and a minimum time offset (min WUS offset) of the next paging occasion. A position of a PDCCH monitoring occasion corresponding to the paging occasion may be firstPDCCH-MonitoringOccasionOfPO.

The wake-up signal is not limited in the embodiment of the present application with regard to its indication manners, which may be specifically set according to an actual situation. The following are three wake-up signal indication manners provided in the embodiments of the present application.

Manner 1: the wake-up signal is used for an indication of at least one group of terminal devices of multiple groups of terminal devices monitoring, on the next PO, the PDCCH scrambled by the P-RNTI. At this time, the multiple groups of terminal devices correspond to one wake-up signal, and the wake-up signals received by different groups of terminal devices are the same.

Manner 2: the wake-up signal is used for an indication of the terminal device in a target device group monitoring, on the next PO, the PDCCH scrambled by the P-RNTI. At this time, one group of terminal devices corresponds to one wake-up signal, and the wake-up signals received by different groups of terminal devices are the same.

Manner 3: the wake-up signal is used for an indication of the terminal device in a device sub-group in the target device group monitoring, on the next PO, the PDCCH scrambled by the P-RNTI. At this time, one group of terminal devices corresponds to one wake-up signal, and the wake-up signals received by the terminal devices in the device sub-group under the device group are all the same.

It should be noted that for Manner 1, the terminal device may use the same P-RNTI and search space in configuration information pre-sent by the network device to monitor the wake-up signal from the network device. For Manner 2 and Manner 3, the terminal device needs to monitor the wake-up signal corresponding to the device group of the terminal device according to the paging radio network temporary identifier P-RNTI corresponding to the device group of the terminal device; and/or, monitor the wake-up signal corresponding to the device group of the terminal device on the search space corresponding to the device group of the terminal device.

S202, the terminal device determines, according to the wake-up signal, a monitoring situation of monitoring on the next PO the PDCCH scrambled by the P-RNTI.

In the present application, after monitoring the wake-up signal from the network device, the terminal device may determine, according to the above-described different indication manners of the wake-up signal, whether to monitor on the next PO the PDCCH scrambled by the P-RNTI.

Exemplarily, if Manner 1 in which the wake-up signal is used to indicate a terminal device in a target device group is adopted, then after the wake-up signal is monitored, the terminal device may determine, according to indication information in the wake-up signal, at least one group of terminal devices that need wakening. The indication information may be bitmap information or one or more group identifiers.

Exemplarily, if Manner 2 in which the wake-up signal is used to indicate a terminal device in a target device group is adopted: then when the wake-up signal is monitored, the terminal device may determine to monitor, on the next PO, the PDCCH scrambled by the P-RNTI; when the wake-up signal is not monitored, the terminal device determines not to monitor, on the next PO, the PDCCH scrambled by the P-RNTI. Or, similar to Manner 1, the terminal device may also determine, according to the indication information in the wake-up signal, at least one group of terminal devices that need wakening.

Exemplarily, if Manner 3 in which the wake-up signal is used to indicate a terminal device in a device sub-group in the target device group is adopted: then when the terminal device monitors the wake-up signal and the wake-up signal is indicative of waking up the device sub-group of the terminal device, the terminal device monitors on the next PO the PDCCH scrambled by the P-RNTI; if the terminal device receives the wake-up signal and the wake-up signal is indicative of not waking up the device sub-group of the terminal device, the terminal device does not need to monitor on the next PO the PDCCH scrambled by the P-RNTI.

In addition, likewise in the three manners, if the wake-up signal is not monitored on a monitoring occasion of a target time period, then the terminal device may not monitor on the next PO the PDCCH scrambled by the P-RNTI, or the terminal device may also determine, according to network configuration, whether to monitor on the next PO the PDCCH scrambled by the P-RNTI. Or, if there is no monitoring occasion for the terminal device in the target time period, the terminal device determines to monitor on the next PO the PDCCH scrambled by the P-RNTI.

S203, the network device schedules a physical downlink shared channel PDSCH on the next PO through the PDCCH scrambled by the P-RNTI, where the PDSCH is used to transmit a paging message.

In the present application, the network device schedules the physical downlink shared channel (physical downlink shared channel, PDSCH) on the next PO through the PDCCH scrambled by the P-RNTI, and only the terminal device that needs wakening indicated by the wake-up signal can monitor the PDCCH scrambled by the P-RNTI, and then receive the paging message through the PDSCH scheduled by the PDCCH.

According to the communication method provided in the embodiments of the present application, a terminal device monitors a wake-up signal from a network device, where the wake-up signal is used to wake up the terminal device that monitors, on a next paging occasion PO, a physical downlink control channel PDCCH scrambled by a paging radio network temporary identifier P-RNTI and determines, according to the wake-up signal, the PDCCH scrambled by the P-RNTI on the next PO. Compared with the prior art, since a wake-up mechanism is introduced, by means of monitoring the wake-up signal from the network device and determining, according to the wake-up signal, whether to monitor on the next PO the monitoring situation of the PDCCH scrambled by the P-RNTI, a terminal device that has no need for monitoring is prevented from monitoring on the next PO, thereby avoiding a paging false alarm of the terminal device.

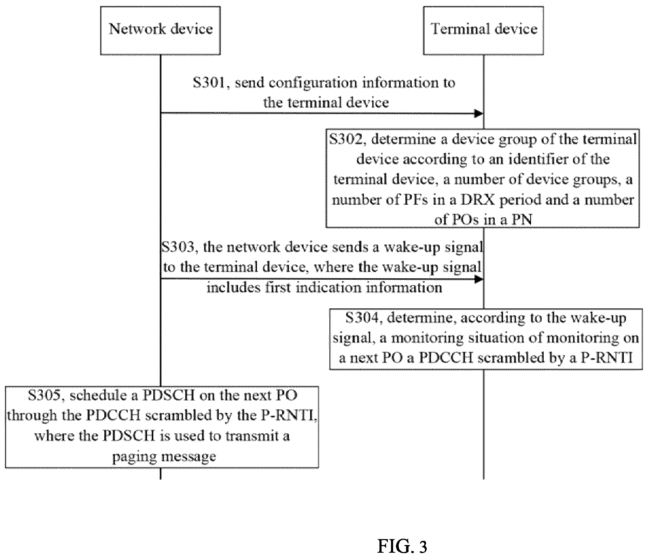

On the basis of the above embodiments, the above-described first indication manner of the wake-up signal will be illustrated in detail below. FIG. 3 is a signaling interaction diagram of another communication method according to an embodiment of the present application. As shown in FIG. 3, the method includes:
S301, a network device sends configuration information to a terminal device, where the configuration information is used to enable the terminal device to monitor the wake-up signal.

The configuration information includes at least one of the following: a maximum time offset of the wake-up signal, a minimum time offset of the wake-up signal, a number of device groups, a number of paging frames (paging frame, PF) in a discontinuous reception (discontinuous reception, DRX) period, and a number of POs in a PF.

In some embodiments, the configuration information may include a paging configuration parameter and a wake-up signal configuration parameter, where the wake-up signal configuration parameter is cell common configuration and may be carried in a system message. The paging configuration parameter may be, for example, the number of PFs in the DRX period and the number of POs in the PF, the wake-up signal configuration parameter may be, for example, the maximum time offset of the wake-up signal, the minimum time offset of the wake-up signal, and device group information.

In addition, in some embodiments, the paging configuration parameter may also include a search space of the paging message, a default paging cycle (defaultPagingCycle) and a position of a first PDCCH-monitoring occasion (irstPDCCH-MonitoringOccasionOfPO); the wake-up signal configuration parameter may also include the search space of the wake-up signal.

The number of device groups as described above should be understood as the number of groups divided by terminal devices mapped to a same PO. In some embodiments, the number of device groups may also be determined in a predefined manner.

S302, the terminal device determines a device group of the terminal device according to an identifier of the terminal device, the number of device groups, the number of PFs in the DRX period and the number of POs in the PF.

In some embodiments, the terminal device may determine the number of POs in the DRX period according to the number of PFs in the DRX period and the number of POs in the PF, and then round down a radio of the identifier of the terminal device to the number of POs in the DRX period to obtain a result of the rounding down. Finally, the terminal device performs a modular operation on the result of the rounding down according to the number of device groups to obtain the device group of the terminal device.

Exemplarily, a formula (1) may be adopted to determine the device group of the terminal device, and the formula (1) is as follows:

$$\text{WUS group index} = \text{floor}(\text{UE ID}/(N*Ns)) \bmod M \qquad (1)$$

where the WUS group index is the device group of the terminal device, the UE ID is the identifier of the terminal device, N is the number of PFs in the DRX period, Ns is the number of POs in a PF, M is the number of device groups, the floor function is a rounding down function, the mod function is a modular function.

S303, the network device sends a wake-up signal to the terminal device, where the wake-up signal includes first indication information, the first indication information is used for an indication of waking up at least one group of terminal devices.

S304, the terminal device determines, according to the wake-up signal, a monitoring situation of monitoring on a next PO a PDCCH scrambled by a P-RNTI.

In step S303 and step S304, if the wake-up signal adopts the first indication manner, the terminal device may determine, according to the indication information in the wake-up signal, the monitoring situation of monitoring on the next PO the PDCCH scrambled by the P-RNTI.

In some embodiments, the terminal device may determine, according to the first indication information, whether it belongs to at least one group of awakened terminal devices. If yes, the terminal device monitors, on the next PO, the PDCCH scrambled by the P-RNTI.

In some embodiments, the first indication information is bitmap information, each bit in the bitmap information corresponds to a group of terminal devices, and the bit is used for an indication of a wake-up state of the terminal device in the corresponding group of terminal devices.

Exemplarily, there are M bits in the above bitmap information, which are respectively used for corresponding to device groups 1-M. If a bit has a state of 1, it means that the terminal device in the device group needs to monitor, on the next PO, the PDCCH scrambled by the P-RNTI; if a bit has a state of 0, it means that the terminal device in the device group does not need to monitor on the next PO the PDCCH scrambled by the P-RNTI.

In other embodiments, the first indication information includes one or more group identifiers, where each group identifier is used to indicate a device group of a group of terminal devices.

In some embodiments, at least one group identifier can be used to indicate a device group of an awakened terminal device.

Exemplarily, if there are an identifier of the first device group and an identifier of the second device group in the indication information, it may mean that the terminal devices in the first device group and the second device group need to monitor on the next PO the PDCCH scrambled by the P-RNTI, while all other terminal devices do not need to monitor on the next PO the PDCCH scrambled by the P-RNTI.

In other embodiments, the above-described at least one group identifier also can be used to indicate a device group of a non-awakened terminal device.

Exemplarily, if there are an identifier of the first device group and an identifier of the second device group in the indication information, it may mean that the terminal devices in the first device group and the second device group do not need to monitor on the next PO the PDCCH scrambled by the P-RNTI, while all other terminal devices need to monitor on the next PO the PDCCH scrambled by the P-RNTI.

S305, the network device schedules a physical downlink shared channel PDSCH on the next PO through the PDCCH scrambled by the P-RNTI, where the PDSCH is used to transmit a paging message.

The technical terms, technical effects, technical features, and optional implementations of S305 may be understood with reference to S203 shown in FIG. 2, and the repeated content will not be described here again.

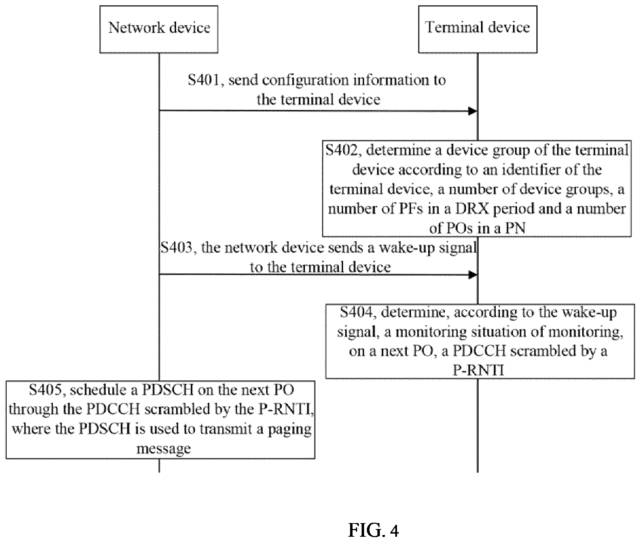

On the basis of the above embodiments, the above-described second indication manner of the wake-up signal will be illustrated in detail below. FIG. 4 is a signaling interaction diagram of still another communication method according to an embodiment of the present application. As shown in FIG. 4, the method includes:
S401, a network device sends configuration information to a terminal device, where the configuration information is used to enable the terminal device to monitor a wake-up signal.

The configuration information includes at least one of the following: a maximum time offset of the wake-up signal, a minimum time offset of the wake-up signal, a number of device groups, a number of paging frames (paging frame, PF) in a discontinuous reception (discontinuous reception, DRX) period, and a number of POs in a PF.

S402, the terminal device determines a device group of the terminal device according to an identifier of the terminal device, the number of device groups, the number of PFs in the DRX period and the number of POs in the PF.

The technical terms, technical effects, technical features, and optional implementations of S401-S402 may be understood with reference to S301-S302 shown in FIG. 3, and the repeated content will not be described here again.

S403, the network device sends a wake-up signal to the terminal device, where the wake-up signal is used to wake up the terminal device that monitors on a next PO a PDCCH scrambled by a P-RNTI.

How to monitor the wake-up signal by group is not limited in the embodiments of the present application. In an optional implementation, the terminal device may monitor the wake-up signal corresponding to the device group of the terminal device according to the P-RNTI corresponding to the device group of the terminal device. In another optional implementation, the terminal device may monitor the wake-up signal corresponding to the device group of the terminal device in a search space corresponding to the device group of the terminal device.

S404, the terminal device determines, according to the wake-up signal, a monitoring situation of monitoring on the next PO the PDCCH scrambled by the P-RNTI.

In the present application, if the wake-up signal adopts the second indication manner, the terminal device may determine, according to second indication information in the wake-up signal, the monitoring situation of monitoring on the next PO the PDCCH scrambled by the P-RNTI, or determine whether to monitor on the next PO the PDCCH scrambled by the P-RNTI, according to whether the wake-up signal is received by the terminal device.

In an optional implementation, if the wake-up signal is monitored, the terminal device determines to monitor on the next PO the PDCCH scrambled by the P-RNTI; if the wake-up signal is not monitored, the terminal device determines not to monitor on the next PO the PDCCH scrambled by the P-RNTI.

In an optional implementation, the wake-up signal includes second indication information, the second indication information is used to indicate the device group corresponding to the wake-up signal. For example, if the terminal device receives the wake-up signal and the wake-up signal is indicative of waking up, the terminal device wakes up on the next PO to normally monitor the PDCCH scrambled by the P-RNTI; if the terminal device receives the wake-up signal and the wake-up signal is indicative of not waking up, the terminal device does not need to wake up on the next PO to monitor the PDCCH scrambled by the P-RNTI.

S405, the network device schedules a physical downlink shared channel PDSCH on the next PO through the PDCCH scrambled by the P-RNTI, where the PDSCH is used to transmit a paging message.

The technical terms, technical effects, technical features, and optional implementations of S405 may be understood with reference to S203 shown in FIG. 2, and the repeated content will not be described here again.

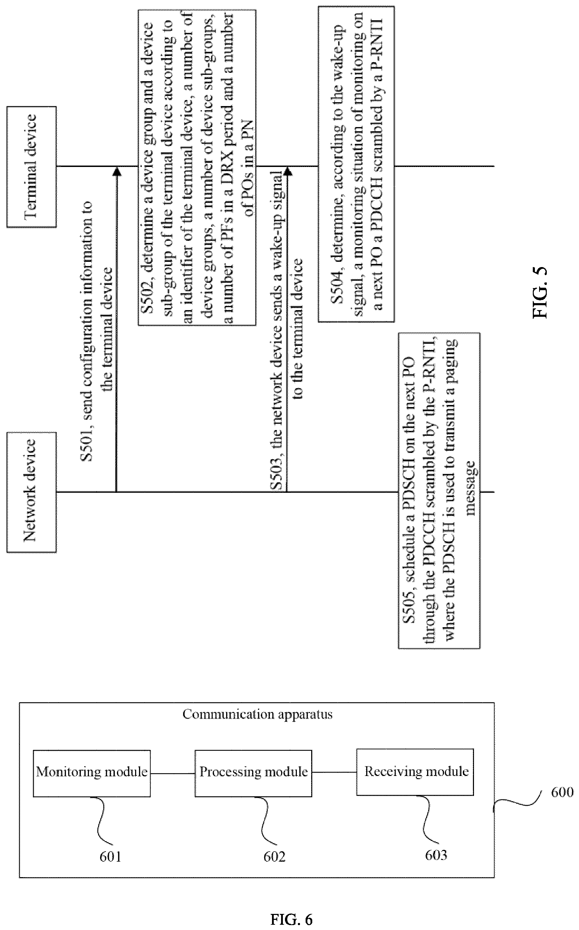

On the basis of the above embodiments, the above-described third indication manner of the wake-up signal will be illustrated in detail below. FIG. 5 is a signaling interaction diagram of yet another communication method according to an embodiment of the present application. As shown in FIG. 5, the method includes:

S501, a network device sends configuration information to a terminal device, where the configuration information is used to enable the terminal device to monitor a wake-up signal.

The configuration information includes at least one of the following: a maximum time offset of the wake-up signal, a minimum time offset of the wake-up signal, a number of device groups, a number of paging frames (paging frame, PF) in a discontinuous reception (discontinuous reception, DRX) period, and a number of POs in a PF.

It should be noted that when the wake-up signal uses the third indication manner for indication, the configuration information sent by the network device to the terminal device also needs to include a number of device sub-groups.

S502, the terminal device determines a device group and a device sub-group of the terminal device according to an identifier of the terminal device, the number of device groups, the number of device sub-groups, the number of PFs in the DRX period and the number of POs in the PF.

In the present application, the terminal device may first determine the number of POs in the DRX period according to the number of PFs in the DRX period and the number of POs in the PF. Second, the terminal device rounds down a radio of the identifier of the terminal device to the number of POs in the DRX period to obtain a result of the rounding down. Third, the terminal device performs a modular operation on the result of the rounding down according to the number of the device groups and the number of the device sub-groups to obtain a result after the modular operation. Finally, the terminal device determines the device group and the device sub-group of the terminal device according to the number of device groups or the number of device sub-groups, and the result after the modular operation.

Exemplarily, a formula (2) may be adopted to determine the result after the modular operation as described above, and the formula (2) is as follows:

$$\text{index} = \text{floor(UE ID}/(N*Ns)) \bmod (M1*M2) \qquad (2)$$

where the index is the result after the modular operation, the UE ID is the identifier of the terminal device, N is the number of PFs in the DRX period, Ns is the number of POs in the PF, M1 is the number of device groups, and M2 is the number of device sub-groups contained in each device group, the floor function is a rounding down function, the mod function is a modular function.

In some embodiments, after the result of the modular operation is indeed, the terminal device may determine the device group of the terminal device according to a ratio of the result after the modular operation to the number of device sub-groups; re-perform a modular operation on the result after the modular operation according to the number of the device sub-groups to obtain the device sub-group of the terminal device.

Exemplarily, formulas (3) and (4) may be adopted to determine the device group and the device sub-group of the terminal device, and the formulas (2) and (3) are as follows:

$$\text{WUS group index} = \text{index}/M2 \qquad (3)$$

$$\text{sub-group index} = \text{index} \bmod M2 \qquad (4)$$

where the WUS group index is the device group of the terminal device, the sub-group index is the device sub-group of the terminal device, the index is the result after the modular operation, M2 is the number of device sub-groups, the mod function is a modular function.

In some other embodiments, after the result after the modular operation is indeed, the terminal device may re-perform a modular operation on the result after the modular operation according to the number of the device groups to obtain the device group of the terminal device; determine the device sub-group of the terminal device according to a radio of the result after the modular operation to the number of device groups.

Exemplarily, formulas (5) and (6) may be adopted to determine the device group and device sub-group of the terminal device. Formulas (5) and (6) are as follows:

$$\text{WUS group index} = \text{index} \bmod M1 \qquad (5)$$

$$\text{sub-group index=index/M1} \qquad (6)$$

where the WUS group index is the device group of the terminal device, the sub-group index is the device sub-group of the terminal device, the index is the result after the modular operation, M1 is the number of device groups, the mod function is a modular function.

S503, the network device sends a wake-up signal to the terminal device, where the wake-up signal is used to wake up the terminal device that monitors on a next PO a PDCCH scrambled by a P-RNTI.

How to monitor the wake-up signal by group is not limited in the embodiments of the present application. In an optional implementation, the terminal device may monitor the wake-up signal corresponding to the device group of the terminal device according to the P-RNTI corresponding to the device group of the terminal device. In another optional implementation, the terminal device may monitor the wake-up signal corresponding to the device group of the terminal device in a search space corresponding to the device group of the terminal device.

S504, the terminal device determines, according to the wake-up signal, a monitoring situation of monitoring on the next PO the PDCCH scrambled by the P-RNTI.

In the present application, if the wake-up signal adopts the third indication manner, the terminal device may determine, according to second indication information in the wake-up signal, the monitoring situation of monitoring on the next PO the PDCCH scrambled by the P-RNTI, the second indication information is bitmap information, each bit in the bitmap information corresponds to a device sub-group in the device group corresponding to the wake-up signal, the bit is indicative of a wake-up state of the terminal device in the corresponding device sub-group.

Exemplarily, there are M2 bits in the bitmap information, which correspond to device sub-groups 1-M2, respectively. For each device sub-group, if the bit corresponding to the device sub-group is set to 1, it means that the device sub-group needs to monitor, on the next PO, the PDCCH scrambled by the P-RNTI; if the bit corresponding to the device sub-group is set to 0, it means that the UE sub-group does not need to monitor, on the next PO, the PDCCH scrambled by the P-RNTI.

S505, the network device schedules a physical downlink shared channel PDSCH on the next PO through the PDCCH scrambled by the P-RNTI, where the PDSCH is used to transmit a paging message.

The technical terms, technical effects, technical features, and optional implementations of S505 may be understood with reference to S203 shown in FIG. 2, and the repeated content will not be described here again.

According to the communication method provided in the embodiments of the present application, a terminal device monitors a wake-up signal from a network device, where the wake-up signal is used to wake up the terminal device that monitors, on a next paging occasion PO, a physical downlink control channel PDCCH scrambled by a paging radio network temporary identifier P-RNTI and the terminal device determines, according to the wake-up signal, to monitor on the next PO the PDCCH scrambled by the P-RNTI for an indication of waking up a wake-up state of the terminal device in the corresponding device sub-group. Compared with the prior art, since a wake-up mechanism is introduced, by means of monitoring the wake-up signal from the network device and determining, according to the wake-up signal, whether to monitor on the next PO the PDCCH scrambled by P-RNTI, a terminal device that has no need for monitoring is prevented from monitoring on the next PO, thereby avoiding a paging false alarm of the terminal device.

A person of ordinary skill in the art may understand that: all or part of the steps in the above method embodiments may be completed by hardware related to program information. The aforementioned program may be stored in a computer readable storage medium. When the program is executed, the steps including the above method embodiments are implemented; and the foregoing storage medium includes: a ROM, a RAM, a magnetic disk, or an optical disk or other media where program codes can be stored.

FIG. 6 is a schematic structural diagram of a communication apparatus according to an embodiment of the present application. The communication apparatus may be implemented by software, hardware, or a combination of both, to execute the above communication method on the terminal device side. As shown in FIG. 6, the communication apparatus 600 includes: a monitoring module 601, a processing module 602, and a receiving module 603.

The monitoring module 601 is configured to monitor a wake-up signal from a network device, where the wake-up signal is used to wake up a terminal device that monitors, on a next paging occasion PO, a physical downlink control channel PDCCH scrambled by a paging radio network temporary identifier P-RNTI.

The processing module 602 is configured to determine, according to the wake-up signal, a monitoring situation of monitoring on the next PO the PDCCH scrambled by the P-RNTI.

In an optional implementation, the wake-up signal is used for an indication of at least one group of terminal devices of multiple groups of terminal devices monitoring on the next PO the PDCCH scrambled by the P-RNTI.

In an optional implementation, the wake-up signal includes first indication information, where the first indication information is used for an indication of waking up at least one group of terminal devices.

In an optional implementation, the first indication information is bitmap information, each bit in the bitmap information corresponds to a group of terminal devices, and the bit is used for an indication of a wake-up state of the terminal device in the corresponding group of terminal devices.

In an optional implementation, the first indication information includes one or more group identifiers, where each group identifier is used to indicate a device group of a group of terminal devices.

In an optional implementation, at least one group identifier is used to indicate a device group of an awakened terminal device.

In an optional implementation, at least one group identifier is used to indicate a device group of a non-awakened terminal device.

In an optional implementation, the processing module 602 is specifically configured to: determine, according to the first indication information, whether the terminal device belongs to at least a group of awakened terminal devices; if yes, monitor on the next PO the PDCCH scrambled by the P-RNTI.

In an optional implementation, the wake-up signal is used for an indication of the terminal device in a target device group monitoring, on the next PO, the PDCCH scrambled by the P-RNTI.

In an optional implementation, the monitoring module 601 is specifically configured to monitor the wake-up signal corresponding to the device group of the terminal device according to the P-RNTI corresponding to the device group of the terminal device.

In an optional implementation, the monitoring module 601 is specifically configured to monitor the wake-up signal corresponding to the device group of the terminal device in a search space corresponding to the device group of the terminal device.

In an optional implementation, the processing module 602 is specifically configured to: when the wake-up signal is monitored, determine to monitor on the next PO the PDCCH scrambled by the P-RNTI; when the wake-up signal is not monitored, determine not to monitor on the next PO the PDCCH scrambled by the P-RNTI.

In an optional implementation, the wake-up signal includes second indication information, where the second indication information is used to indicate the device group corresponding to the wake-up signal.

In an optional implementation, the second indication information is bitmap information, each bit in the bitmap information corresponds to a device sub-group in the device group corresponding to the wake-up signal, the bit is used for an indication of a wake-up state of the terminal device in the corresponding device sub-group.

In an optional implementation, the monitoring module 601 is specifically configured to monitor the wake-up signal from the network device on a PO of a target time period.

In an optional implementation, the target time period is a time period between a maximum time offset of the next PO and a minimum time offset of the next PO.

In an optional implementation, the apparatus further includes: the receiving module 603, configured to receive configuration information from the network device, where the configuration information is used for an indication of the terminal device monitoring the wake-up signal.

In an optional implementation, the configuration information includes at least one of the following: a maximum time offset of the wake-up signal, a minimum time offset of the wake-up signal, a number of device groups, a number of device sub-groups, a number of paging frames PF in a discontinuous reception DRX period and a number of POs in a PF.

In an optional implementation, the processing module 602 is further configured to determine the device group of the terminal device according to an identifier of the terminal device, the number of device groups, the number of PFs in the DRX period and the number of POs in the PF.

In an optional implementation, the processing module 602 is specifically configured to: determine the number of POs in the DRX period according to the number of PFs in the DRX period and the number of POs in the PF; round down a ratio of the identifier of the terminal device to the number of POs in the DRX period to obtain a result of the rounding down; perform a modular operation on the result of the rounding down according to the number of the device groups to obtain the device group of the terminal device.

In an optional implementation, the processing module 602 is further configured to determine the device group and the device sub-group of the terminal device according to the identifier of the terminal device, the number of device groups, the number of device sub-groups, the number of PFs in the DRX period and the number of POs in the PF.

In an optional implementation, the processing module 602 is specifically configured to: determine the number of POs in the DRX period according to the number of PFs in the DRX period and the number of POs in the PF; round down a ratio of the identifier of the terminal device to the number of POs in the DRX period to obtain a result of the rounding down; perform a modular operation on the result of the rounding down according to the number of the device groups and the number of the device sub-groups to obtain a result after the modular operation; determine the device group and the device sub-group of the terminal device according to the number of the device groups or the number of the device sub-groups, and the result after the modular operation.

In an alternative implementation, the processing module 602 is specifically configured to: determine the device group of the terminal device according to a ratio of the result after the modular operation to the number of the device sub-groups; re-perform a modular operation on the result after the modular operation according to the number of the device sub-groups to obtain the device sub-group of the terminal device.

In an optional implementation, the processing module 602 is specifically configured to: re-perform a modular operation on the result after the modular operation according to the number of the device groups to obtain the device group of the terminal device; determine the device sub-group of the terminal device according to a ratio of the result after the modular operation to the number of the device groups.

The communication apparatus provided in the embodiment of the present application may execute the actions of the communication method on the terminal device side in the above method embodiments; implementation principles and technical effects therebewteen are similar, and are not repeated here.

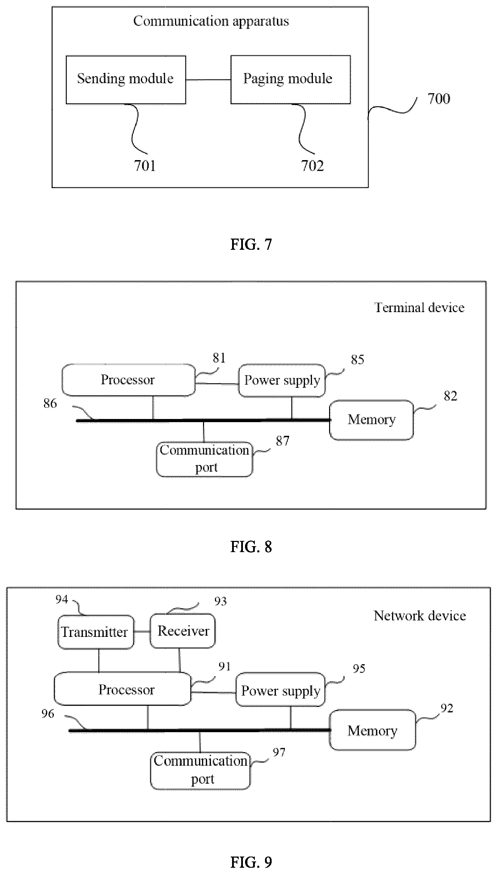

FIG. 7 is a schematic structural diagram of another communication apparatus according to an embodiment of the present application. The communication apparatus may be implemented by software, hardware, or a combination of both, to execute the above communication method on the network device side. As shown in FIG. 7, the communication apparatus 700 includes: a sending module 701 and a paging module 702.

The sending module 701 is configured to send a wake-up signal to a terminal device, where the wake-up signal is used to wake up a terminal device that monitors, on a next paging occasion PO, a physical downlink control channel PDCCH scrambled by a paging radio network temporary identifier P-RNTI.

The paging module 702 is configured to schedule a physical downlink shared channel PDSCH on the next PO through the PDCCH scrambled by the P-RNTI, where the PDSCH is used to transmit a paging message.

In an optional implementation, the wake-up signal is used for an indication of at least one group of terminal devices of multiple groups of terminal devices monitoring on the next PO the PDCCH scrambled by the P-RNTI.

In an optional implementation, the wake-up signal includes first indication information, where the first indication information is used for an indication of waking up at least one group of terminal devices.

In an optional implementation, the first indication information is bitmap information, each bit in the bitmap information corresponds to a group of terminal devices, and the bit is used for an indication of a wake-up state of the terminal device in the corresponding group of terminal devices.

In an optional implementation, the first indication information includes one or more group identifiers, where each group identifier is used to indicate a device group of a group of terminal devices.

In an optional implementation, at least one group identifier is used to indicate a device group of an awakened terminal device.

In an optional implementation, at least one group identifier is used to indicate a device group of a non-awakened terminal device.

In an optional implementation, the wake-up signal is used for an indication of the terminal device in a target device group monitoring, on the next PO, the PDCCH scrambled by the P-RNTI.

In an optional implementation, the wake-up signal includes second indication information, where the second indication information is used to indicate the device group corresponding to the wake-up signal.

In an optional implementation, the second indication information is bitmap information, each bit in the bitmap information corresponds to a device sub-group in the device group corresponding to the wake-up signal, the bit is used for an indication of a wake-up state of the terminal device in the corresponding device sub-group.

In an optional implementation, the sending module 701 is further configured to send configuration information to the terminal device, where the configuration information is used to enable the terminal device to monitor the wake-up signal.

In an optional implementation, the configuration information includes at least one of the following: a maximum time offset of the wake-up signal, a minimum time offset of the wake-up signal, a number of device groups, a number of device sub-groups, a number of paging frames PF in a discontinuous reception DRX period and a number of POs in a PF.

The communication apparatus provided in the embodiment of the present application may execute the actions of the communication method on the network device side in the above method embodiments; implementation principles and technical effects therebetween are similar, and are not repeated here.

FIG. 8 is a schematic structural diagram of a terminal device according to an embodiment of the present application. As shown in FIG. 8, the terminal device may include: a processor 81 (for example, a CPU), a memory 82, a receiver 83 and a transmitter 84; the receiver 83 and the transmitter 84 are coupled to the processor 81, and the processor 81 controls a receiving operation of the receiver, the processor 81 controls a transmitting operation of the transmitter 84. The memory 82 may include a high-speed RAM memory, or may also include a non-volatile memory NVM, such as at least one disk memory. Various information may be stored in the memory 82 to complete various processing functions and achieve the methods and steps of the embodiments of the present application. Optionally, the terminal device involved in the embodiment of the present application may further include: a power supply 85, a communication bus 86 and a communication port 87. The receiver 83 and the transmitter 84 may be integrated in a transceiver of the terminal device, or may be independent transceiver antennas on the terminal device. The communication bus 86 is used to achieve communication connections between components. The above communication port 87 is used to achieve a connection and communication between the terminal device and other peripherals.

In the embodiment of the present application, the above memory 82 is used to store a computer executable program code, and the program code includes information which, when executed by the processor 81, enables the processor 81 to perform a processing operation of the terminal device in the above method embodiments, enables the transmitter 84 to execute a transmitting operation of the terminal device in the above method embodiments, and enables the receiver 83 to execute a receiving operation of the terminal device in the above method embodiments. The implementation principles and technical effects therebetween are similar and are not repeated here.

FIG. 9 is a schematic structural diagram of a network device according to an embodiment of the present application. As shown in FIG. 9, the network device may include: a processor 91 (for example, a CPU) and a memory 92; the memory 92 may include a high-speed RAM memory, or may also include a non-volatile memory NVM, such as at least one disk memory. Various information may be stored in the memory 92 to complete various processing functions and achieve the methods and steps of the embodiments of the present application. Optionally, the network device involved in the embodiment of the present application may further include: a power supply 95, a communication bus 96 and a communication port 97. The communication bus 96 is used to achieve communication connections between components. The above communication port 97 is used to achieve a connection and communication between the network device and other peripherals.

In the embodiment of the present application, the above memory 92 is used to store computer executable program codes, and the program codes include information which, when executed by the processor 91, enables the processor 91 to perform a processing operation of the network device in the above method embodiments. The implementation principles and technical effects therebetween are similar and are not repeated here.

An embodiment of the present application further provides a communication system including a terminal device and a network device. The terminal device executes the above communication method on the terminal device side, and the network device executes the above communication method on the network device side.

An embodiment of the present application further provides a chip including a processor and an interface. The interface is used to input and output data or an instruction processed by the processor. The processor is used to execute the method provided in the above method embodiments. The chip may be used in the terminal device, and may also be used in the network device.

The present invention further provides a computer-readable storage medium. The computer-readable storage medium may include: a U disk, a mobile hard disk, a read-only memory (ROM, Read-Only Memory), a random access memory (RAM, Random Access Memory), a magnetic disk or an optical disk or other media where program codes may be stored. Specifically, the computer-readable storage medium stores program information, the program information is used for the communication method on the terminal device side, or for the communication method on the network device side.

An embodiment of the present application further provides a program. When the program is executed by a processor, it is used to execute the communication method on the terminal device side or the communication method on the network device side according to the above method embodiments.

An embodiment of the present application further provides a program product, such as a computer-readable storage medium, in which an instruction is stored. The instruction, when running on a computer, enables the computer to execute the communication method on the terminal device side or the communication method on the network device side according to the above method embodiments.

In the above embodiments, an implementation is possible in whole or in part by software, hardware, firmware, or any combination thereof. When implemented by the software, the implementation is possible in whole or in part in a form of a computer program product. The computer program product includes one or more computer instructions. When the computer program instruction is loaded and executed on the computer, processes or functions in accordance with the embodiments of the present invention are generated in whole or in part. The computer may be a general-purpose computer, a special-purpose computer, a computer network, or other programmable apparatuses. The computer instruction may be stored in a computer-readable storage medium, or transmitted from one computer-readable storage medium to another computer-readable storage medium, for example, the computer instruction may be transmitted from a website, a computer, a server, or a data center to another website, computer, server or data center in a wired (such as a coaxial cable, an optical fiber, a digital subscriber line (DSL)) manner or a wireless (such as an infrared, radio, a microwave, etc.) manner. The computer-readable storage medium may be any available media that can be accessed by the computer, or may be a data storage device including a server or a data center integrated with one or more available media. The available medium may be a magnetic medium (for example, a floppy disk, a hard disk, a magnetic tape), an optical medium (for example, a DVD), or a semiconductor medium (for example, a solid state disk Solid State Disk (SSD)).

Finally, it is to be noted that: the above embodiments are only used to illustrate the technical solutions of the present invention, but not to limit it; although the present invention has been illustrated in detail with reference to the foregoing embodiments, those skilled in the art should understand that: the technical solutions recorded in the foregoing embodiments may still be modified, or some or all of the technical features may be equivalently substituted; and these modifications or substitutions do not make the essence of the corresponding technical solutions deviate from the scope of the technical solutions of the embodiments of the present invention.

**Claims**

1. A communication method, comprising:

   monitoring, by a terminal device (101), a wake-up signal from a network device (102), wherein the wake-up signal is used to wake up the terminal device (101) that monitors, on a next paging occasion, PO, a physical downlink control channel, PDCCH, scrambled by a paging radio network temporary identifier, P-RNTI;
   determining (S202, S304, S404, S504), according to the wake-up signal, by the terminal device (101), a monitoring situation of monitoring the PDCCH scrambled by the P-RNTI on the next PO,
   wherein the wake-up signal comprises first indication information, the first indication information is used for an indication of waking up at least one group of terminal devices (101);
   the first indication information is bitmap information, each bit in the bitmap information corresponds to a group of terminal devices (101), and the bit is used for an indication of a wake-up state of the terminal device (101) in the corresponding group of terminal devices (101).

2. The method according to claim 1, wherein the monitoring, by the terminal device (101), the wake-up signal from the network device (102) comprises:
   monitoring, by the terminal device (101), the wake-up signal from the network device (102) on a monitoring occasion of a target time period.

3. The method according to claim 2, wherein the target time period is a time period between a maximum time offset of the next PO and a minimum time offset of the next PO.

4. The method according to any one of claims 1 to 3, wherein the determining (S202), according to the wake-up signal, by the terminal device (101), the monitoring situation of monitoring the PDCCH scrambled by the P-RNTI on the next PO comprises:

   determining, according to the first indication information, by the terminal device (101), whether the terminal device (101) belongs to at least one group of awakened terminal devices (101);
   if the terminal device (101) belongs to the at least one group of awakened terminal devices (101), monitoring on the next PO, by the terminal device (101), the PDCCH scrambled by the P-RNTI.

5. The method according to any one of claims 1 to 4, further comprising:

   receiving, by the terminal device (101), configuration information from the network device (102), wherein the configuration information is used for an indication of the terminal device (101) monitoring the wake-up signal;
   wherein the configuration information comprises at least one of: a maximum time offset of the wake-up signal, a minimum time offset of the wake-up signal, a number of device groups, a number of device sub-groups, a number of paging frames, PF, in a discontinuous reception, DRX, period and a number of POs in a PF.

6. The method according to claim 5, further comprising:
   determining (S302, S402, S502), by the terminal device (101), the device group of the terminal device (101) according to an identifier of the terminal device (101), the number of device groups, the number of PFs in the DRX period and the number of POs in the PF.

7. The method according to claim 6, wherein the determining, by the terminal device (101), the device group of the terminal device (101) comprises:

   determining, by the terminal device (101), the number of POs in the DRX period according to the number of PFs in the DRX period and the number of POs in the PF;
   rounding down, by the terminal device (101), a ratio of the identifier of the terminal device (101) to the number of POs in the DRX period to obtain a result of the rounding down;
   performing, by the terminal device (101), a modular operation on the result of the rounding down according to the number of the device groups to obtain the device group of the terminal device (101).

8. A communication method, comprising:

   sending (S201, S303, S403, S503), by a network device (102), a wake-up signal to a terminal device (101), wherein the wake-up signal is used to wake up the terminal device (101) that monitors, on a next paging occasion, PO, a physical downlink control channel, PDCCH, scrambled by a paging radio network temporary identifier, P-RNTI;

scheduling (S203, S305, S405, S505), by the network device (102), a physical downlink shared channel, PDSCH, on the next PO through the PDCCH scrambled by the P-RNTI, wherein the PDSCH is used to transmit a paging message;

wherein the wake-up signal comprises first indication information, the first indication information is used for an indication of waking up at least one group of terminal devices (101);

the first indication information is bitmap information, each bit in the bitmap information corresponds to a group of terminal devices (101), and the bit is used for an indication of a wake-up state of the terminal device (101) in the corresponding group of terminal devices (101).

9. The method according to claim 8, wherein the wake-up signal from the network device (102) is monitored by the terminal device (101) on a monitoring occasion of a target time period.

10. The method according to claim 9, wherein the target time period is a time period between a maximum time offset of the next PO and a minimum time offset of the next PO.

11. The method according to any one of claims 7 to 10, further comprising:

sending (S301, S401, S501), by the network device (102), configuration information to the terminal device (101), the configuration information is used to enable the terminal device (101) to monitor the wake-up signal;

wherein the configuration information comprises at least one of: a maximum time offset of the wake-up signal, a minimum time offset of the wake-up signal, a number of device groups, a number of device sub-groups, a number of paging frames, PF, in a discontinuous reception, DRX, period and a number of POs in a PF.

12. A communication apparatus (600), comprising:

a monitoring module (601), configured to monitor a wake-up signal from a network device (102), wherein the wake-up signal is used to wake up a terminal device (101) that monitors, on a next paging occasion, PO, a physical downlink control channel, PDCCH, scrambled by a paging radio network temporary identifier, P-RNTI;

a processing module (602), configured to determine, according to the wake-up signal, a monitoring situation of monitoring on the next PO the PDCCH scrambled by the P-RNTI;

wherein the wake-up signal comprises first indication information, the first indication information is used for an indication of waking up at least one group of terminal devices (101);

the first indication information is bitmap information, each bit in the bitmap information corresponds to a group of terminal devices (101), and the bit is used for an indication of a wake-up state of the terminal device (101) in the corresponding group of terminal devices (101).

13. A communication apparatus (700), comprising:

a sending module (701), configured to send a wake-up signal to a terminal device (101), wherein the wake-up signal is used to wake up the terminal device (101) that monitors, on a next paging occasion, PO, a physical downlink control channel, PDCCH, scrambled by a paging radio network temporary identifier P-RNTI;

a paging module (702), configured to schedule a physical downlink shared channel, PDSCH, on the next PO through the PDCCH scrambled by the P-RNTI, wherein the PDSCH is used to transmit a paging message;

wherein the wake-up signal comprises first indication information, the first indication information is used for an indication of waking up at least one group of terminal devices (101);

the first indication information is bitmap information, each bit in the bitmap information corresponds to a group of terminal devices (101), and the bit is used for an indication of a wake-up state of the terminal device (101) in the corresponding group of terminal devices (101).

14. A chip comprising a processor configured to call and run a computer program in a memory to enable a device having installed thereon the chip to perform the method of any one of claims 1 to 7.

15. A chip comprising a processor configured to call and run a computer program in a memory to enable a device having installed thereon the chip to perform the method of any one of claims 8 to 11.

FIG. 1

Network device

Terminal device

S201, send a wake-up signal to the terminal device

S202, determine, according to the wake-up signal, a monitoring situation of monitoring on a next PO a PDCCH scrambled by a P-RNTI

S203, schedule a PDSCH on the next PO through the PDCCH scrambled by the P-RNTI, where the PDSCH is used to transmit a paging message

FIG. 2

Network device              Terminal device

S301, send configuration information to
the terminal device

S302, determine a device group of the terminal
device according to an identifier of the
terminal device, a number of device groups, a
number of PFs in a DRX period and a number
of POs in a PN

S303, the network device sends a wake-up signal
to the terminal device, where the wake-up signal
includes first indication information

S304, determine, according to the wake-up
signal, a monitoring situation of monitoring on
a next PO a PDCCH scrambled by a P-RNTI

S305, schedule a PDSCH on the next PO
through the PDCCH scrambled by the P-RNTI,
where the PDSCH is used to transmit a
paging message

FIG. 3

EP 4 408 092 A2

```
┌─────────────────┐                    ┌─────────────────┐
│ Network device  │                    │ Terminal device │
└─────────────────┘                    └─────────────────┘
        │                                       │
        │  S401, send configuration information to │
        │          the terminal device          │
        │──────────────────────────────────────▶│
        │                                       │
        │                          ┌────────────────────────────────────┐
        │                          │ S402, determine a device group of the terminal │
        │                          │ device according to an identifier of the │
        │                          │ terminal device, a number of device groups, a │
        │                          │ number of PFs in a DRX period and a number │
        │                          │           of POs in a PN            │
        │                          └────────────────────────────────────┘
        │  S403, the network device sends a wake-up signal │
        │           to the terminal device       │
        │──────────────────────────────────────▶│
        │                                       │
        │                          ┌────────────────────────────────────┐
        │                          │ S404, determine, according to the wake-up │
        │                          │ signal, a monitoring situation of monitoring, │
        │                          │ on a next PO, a PDCCH scrambled by a │
        │                          │              P-RNTI                 │
        │                          └────────────────────────────────────┘
┌──────────────────────────────────────┐     │
│ S405, schedule a PDSCH on the next PO │     │
│through the PDCCH scrambled by the P-RNTI,│  │
│ where the PDSCH is used to transmit a paging │
│              message                  │     │
└──────────────────────────────────────┘     │
        │                                       │
```

FIG. 4

Terminal device

Network device

S501, send configuration information to the terminal device

S502, determine a device group and a device sub-group of the terminal device according to an identifier of the terminal device, a number of device groups, a number of device sub-groups, a number of PFs in a DRX period and a number of POs in a PN

S503, the network device sends a wake-up signal to the terminal device

S504, determine, according to the wake-up signal, a monitoring situation of monitoring on a next PO a PDCCH scrambled by a P-RNTI

S505, schedule a PDSCH on the next PO through the PDCCH scrambled by the P-RNTI, where the PDSCH is used to transmit a paging message

**FIG. 5**

Communication apparatus

| Monitoring module | Processing module | Receiving module |

601

602

603

600

**FIG. 6**

Communication apparatus

Sending module | Paging module

701 | 702

700

FIG. 7

Terminal device

Processor 81 | Power supply 85

86 | Memory 82

Communication port 87

FIG. 8

Transmitter 94 | Receiver 93

Network device

Processor 91 | Power supply 95

96 | Memory 92

Communication port 97

FIG. 9